# EUROPEAN PATENT APPLICATION

(11) **EP 4 831 048 A1**
(43) Date of publication of application: **28.10.2026**
(21) Application number: 24906971.7
(22) Date of filing: 08.11.2024
(51) Int. Cl.: B62D 65/18

(54) **CONTROL DEVICE, VEHICLE CONTROL METHOD, AND SYSTEM**

(30) Priority: 19.12.2023 JP 2023213566
(71) Applicant: TOYOTA JIDOSHA KABUSHIKI KAISHA, Toyota-Shi, Aichi-Ken 471-8571 (JP)
(72) Inventor: SHIMIZU, Koji, Toyota-shi, Aichi 471-8571 (JP); FUCHIMOTO, Kazuo, Toyota-shi, Aichi 471-8571 (JP); YOKOYAMA, Daiki, Toyota-shi, Aichi 471-8571 (JP); KATOU, Jyunya, Toyota-shi, Aichi 471-0856 (JP)
(74) Representative: J A Kemp LLP
(86) International application number: PCT/JP2024/039799
(87) International publication number: WO 2025/134583

(57) **Abstract**

A control device includes a step information identification unit, a state identification unit, and a control unit. The step information identification unit identifies a production step to be executed to a vehicle capable of running by unmanned driving. The state identification unit identifies a start state defining a state of the vehicle at a timing at which the identified production step is started. The control unit executes state control processing of controlling the vehicle in such a manner that the state of the vehicle becomes the start state.

## Description

### CROSS-REFERENCE TO RELATED APPLICATIONS

The present application claims priority to Japanese Patent Application No. 2023-213566 filed on December 19, 2023, which is incorporated herein by reference in its entirety.

### FIELD

The present disclosure relates to a control device, a vehicle control method, and a system.

### RELATED ART

Patent Literature 1 describes a method for inspecting an in-vehicle electronic control device. In this inspection method, when an inspection possible condition is not fulfilled, a worker is notified of a measure to take in order to fulfill the inspection possible condition. The inspection possible condition should be satisfied by an inspection target vehicle in execution of inspection in an inspection step.

### PRIOR ART DOCUMENT

### PATENT LITERATURE

Patent Literature 1: JP 2010-38783 A

### SUMMARY

### TECHNICAL PROBLEM

In Patent Literature 1, the inspection possible condition can be fulfilled by the worker taking a measure, and the in-vehicle electronic control device can be appropriately inspected. Meanwhile, a technology of moving a vehicle by unmanned driving is known. There is a demand for a technology of appropriately executing inspection of a vehicle capable of moving by such unmanned driving. Such a problem is common not only to inspection but also to execution of various production steps related to production of a vehicle capable of moving by unmanned driving.

### SOLUTION TO PROBLEM

The present disclosure can be implemented as the following aspects.
(1) According to a first aspect of the present disclosure, a control device is provided. The control device includes a step identification unit, a state identification unit, and a control unit. The step identification unit identifies a production step to be executed to a vehicle capable of running by unmanned driving. The state identification unit identifies a start state defining a state of the vehicle at a timing at which the identified production step is started. The control unit executes state control processing of controlling the vehicle in such a manner that the state of the vehicle becomes the start state. According to this aspect, a possibility that the production step is appropriately executed can be increased.
(2) In the above-described aspect, the control device may include a state determination unit that executes, after execution of the state control processing, determination processing of determining whether the state of the vehicle is the start state. When the state of the vehicle is different from the start state in the determination processing, the control unit may execute at least one of stop processing of stopping running of the vehicle, evacuation processing of evacuating the vehicle to a predetermined evacuation place, and notification processing of giving notification of an abnormality. According to this aspect, for a target vehicle and a subsequent vehicle, a possibility that the production step is appropriately executed can be increased.
(3) In the above-described aspect, the control unit may not execute the stop processing and the notification processing when a number of executions of the evacuation processing is equal to or less than a predetermined reference number, and may execute at least one of the stop processing and the notification processing when the number of executions is greater than the reference number. According to this aspect, the production step can more efficiently executed, and a possibility that the production step is appropriately executed can be increased.
(4) In the above-described aspect, the production step may be a step of inspecting wheel alignment of the vehicle. The start state may include that a shift position of the vehicle is in a neutral range, a foot brake and a parking brake of the vehicle are not operating, and a steering angle of the vehicle is within a predetermined range. According to this aspect, the inspection step of the wheel alignment of the vehicle can be appropriately executed by utilizing unmanned driving of the vehicle.
(5) In the above-described aspect, the production step may be a step of inspecting a side-slip amount of the vehicle. The start state may include that a vehicle speed of the vehicle is equal to or less than a predetermined value, a shift position of the vehicle is in a neutral range, and a steering angle of the vehicle is within a predetermined range. According to this aspect, the inspection step of the side-slip amount of the vehicle can be appropriately executed by utilizing unmanned driving of the vehicle.
(6) In the above-described aspect, the production step may be a step of inspecting braking force of a braking device of the vehicle. The start state may include that a brake different from a brake to be inspected is not operating in the vehicle, a shift position of the vehicle is in a neutral range, and a steering angle of the vehicle is within a predetermined range. According to this aspect, the inspection step of the braking device of the vehicle can be appropriately executed by utilizing unmanned driving of the vehicle.
(7) The production step may be a step of optically inspecting a headlamp provided to the vehicle. The start state may include that a shift position of the vehicle is in a parking range. According to this aspect, the inspection step of the headlamp of the vehicle can be appropriately executed by utilizing unmanned driving of the vehicle.
(8) In the above-described aspect, the start state may include that the shift position is in a neutral range immediately before the parking range. According to this aspect, the inspection step of the headlamp of the vehicle can be more appropriately executed by utilizing unmanned driving of the vehicle.
(9) In the above-described aspect, the production step may be a step of inspecting an acceleration device provided to the vehicle by causing the vehicle to run on a rotatable roller. The start state may include that a vehicle speed of the vehicle is equal to or less than a predetermined value, and a steering angle of the vehicle is within a predetermined range. According to this aspect, the inspection step of the acceleration device of the vehicle can be more appropriately executed by utilizing unmanned driving of the vehicle.
(10) In the above-described aspect, the production step may be a step of inspecting a steering device provided to the vehicle. The start state may include that a shift position of the vehicle is in a neutral range, and a steering force applied to the steering device is equal to or less than a predetermined value. According to this aspect, the inspection step of the steering angle of the vehicle can be appropriately executed by utilizing unmanned driving of the vehicle.
(11) In the above-described aspect, the production step may be a step of electrically connecting a predetermined component to a predetermined portion of the vehicle. The start state may include that power is not supplied to the portion. According to this aspect, the step of attaching an electric component or an electronic component to the vehicle can be appropriately executed by utilizing unmanned driving of the vehicle.
(12) In the above-described aspect, when the production step is a first production step, the start state may include a state for not interfering with a second production step different from the first production step. According to this aspect, it is possible to suppress interference with the second inspection step due to the first inspection step, increasing a possibility that each production step is appropriately executed.
(13) In the above-described aspect, a work place for executing the first production step and a work place for executing the second production step may be adjacent to each other. According to this aspect, a possibility that each production step is appropriately executed can be effectively increased.
(14) In the above-described aspect, the second production step may be executed after the first production step. According to this aspect, a possibility that each production step is appropriately executed can be more effectively increased.
(15) In the above-described aspect, the second production step may be a step of executing work using an optical sensor. The start state may include that a lighting device provided to the vehicle is not turned on. According to this aspect, it is possible to suppress interference with the work executed at the second work place due to light emitted from the lighting device of the vehicle present at the first work place.
(16) In the above-described aspect, the second production step may be a step of executing work using a radar. The start state may include that a radio wave is not transmitted from a radar provided to the vehicle. According to this aspect, it is possible to suppress interference with the work executed at the second work place due to a radio wave transmitted from the radar of the vehicle present at the first work place.

The present disclosure can be implemented in aspects other than the aspect as the control device described above. For example, the present disclosure can be implemented in aspects, such as a control method of a vehicle, a system, a program, a non-transitory recording medium recording a program, and a program product. Note that the program product may be provided as, for example, a recording medium recording a program, or a program product distributable over a network.

### BRIEF DESCRIPTION OF THE DRAWINGS

Fig. 1 is a conceptual diagram illustrating a configuration of a system according to a first embodiment;
Fig. 2 is a diagram illustrating a first inspection step and a second inspection step according to the first embodiment;
Fig. 3 is a block diagram illustrating a configuration of the system according to the first embodiment;
Fig. 4 is a flowchart illustrating a procedure of running control of a vehicle according to the first embodiment;
Fig. 5 is a flowchart illustrating a procedure of vehicle control processing according to the first embodiment;
Fig. 6 is a diagram illustrating a first inspection step and a second inspection step according to a second embodiment;
Fig. 7 is a diagram illustrating a first inspection step and a second inspection step according to a third embodiment;
Fig. 8 is a diagram illustrating a first inspection step according to a fourth embodiment;
Fig. 9 is a diagram illustrating a production step executed at a second work place according to a fifth embodiment;
Fig. 10 is a flowchart illustrating a procedure of vehicle control processing according to a sixth embodiment;
Fig. 11 is a block diagram illustrating a configuration of a system according to a

### seventh embodiment; and

Fig. 12 is a flowchart illustrating a procedure of running control of a vehicle according to the seventh embodiment.

### DETAILED DESCRIPTION

### A. First Embodiment:

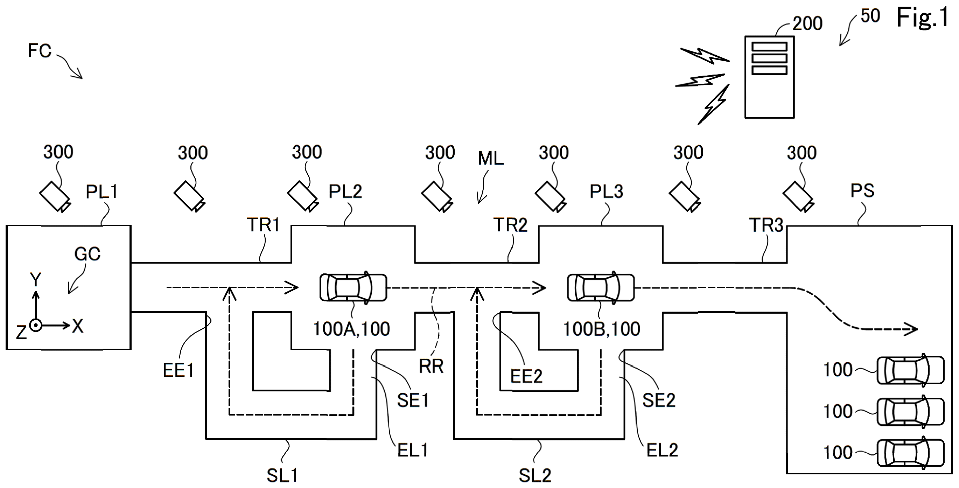

Fig. 1 is a conceptual diagram illustrating a configuration of a system 50 according to a first embodiment. The system 50 includes one or more vehicles 100, a server 200, one or more external sensors 300, and a notification unit 400.

The vehicle 100 may be a vehicle that runs with wheels or a vehicle that runs with continuous tracks, and is, for example, a passenger car, a truck, a bus, a two-wheeled vehicle, a four-wheeled vehicle, a tank, or a construction vehicle. The vehicle 100 includes an electric vehicle (BEV: battery electric vehicle), a gasoline vehicle, a hybrid vehicle, and a fuel cell vehicle. In this embodiment, the vehicle 100 is an electric vehicle.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

The vehicle 100 may have any configuration capable of moving by unmanned driving, and may be, for example, in a form of a platform having a configuration described below. Specifically, the vehicle 100 includes at least a vehicle control device described later and an actuator group in order to exhibit three functions of "running", "turning", and "stopping" by unmanned driving. In a case in which information is acquired from a device outside of the vehicle 100 for unmanned driving, the vehicle 100 may further include a communication device. That is, the vehicle 100 capable of moving by unmanned driving may not include at least one or some of interior components such as a driver's seat and a dashboard attached, may not include at least one or some of exterior components such as a bumper and a fender attached, or may not include a body shell attached. In this case, the remaining component such as the body shell may be attached to the vehicle 100 before the vehicle 100 is shipped from a factory FC, or the remaining component such as the body shell may be attached the vehicle 100 after the vehicle 100 is shipped from the factory FC in a state in which the remaining component such as the body shell is not attached to the vehicle 100. Each component may be attached to the vehicle 100 from any direction, such as an upper side, a lower side, a front side, a rear side, a right side, or a left side, and the components may be attached from the same direction or from different directions. Note that the vehicle 100 in this embodiment is in a form of a completed vehicle.

In this embodiment, the system 50 is used in the factory FC where the vehicle 100 is produced. The vehicle 100 is capable of running within the factory FC by unmanned driving.

The factory FC includes one or more work places for executing production steps related to the vehicle 100. The production steps may include various steps for producing the vehicle 100, such as an assembly step of assembling the vehicle 100, an attachment step of attaching a component to the vehicle 100, and an inspection step of inspecting the vehicle 100. The example of Fig. 1 illustrates as the work places a first work place PL1 where the assembly step of assembling the vehicle 100 is executed, a second work place PL2 where a first inspection step is executed, and a third work place PL3 where a second inspection step is executed. Further, Fig. 1 illustrates a storage place PS for storing the vehicle 100 for which inspection has been completed. The production steps are executed in an order of the assembly step, the first inspection step, and the second inspection step. As illustrated in Fig. 1, the work places and the storage place PS are connected by a track on which the vehicle 100 can run. The first work place PL1 and the second work place PL2 are connected by a first track TR1. The second work place PL2 and the third work place PL3 are connected by a second track TR2. The third work place PL3 and the storage place PS are connected by a third track TR3. Below, when the tracks provided to the factory FC are not distinguished from each other, each of them is also simply referred to as a track. In the factory FC, a plurality of external sensors 300 are installed along the tracks. A position of each external sensor 300 in the factory FC is adjusted in advance. The vehicle 100 moves from the first work place PL1 toward the storage place PS through each track as appropriate by unmanned driving. The vehicle 100 runs the first work place PL1, the second work place PL2, the third work place PL3, and the storage place PS in this order.

The second work place PL2 and the third work place PL3 are work places adjacent to each other in a transfer target direction of the vehicle 100 in the factory FC. The target direction means a traveling direction of the vehicle 100 along a reference route RR described later. That is, the target direction is a direction from a rear side toward a front side in the reference route RR. Specifically, the target direction is a direction from the rear side toward the front side in the reference route RR on a main line ML.

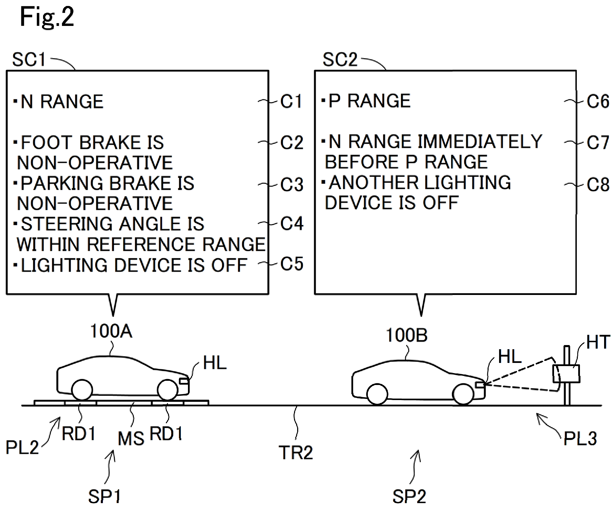

Fig. 2 is a diagram illustrating a first inspection step SP1 and a second inspection step SP2 according to this embodiment. Fig. 2 illustrates a situation in which the first inspection step SP1 is executed to a vehicle 100A and the second inspection step SP2 is executed to a vehicle 100B. The first inspection step SP1 is a wheel alignment inspection step of inspecting wheel alignment of the vehicle 100. The second inspection step SP2 is a headlamp inspection step of optically inspecting a headlamp provided to the vehicle 100 by using an optical sensor. Below, a step of inspecting the vehicle 100, such as the first inspection step SP1 and the second inspection step SP2, is also simply referred to as an inspection step. When the first inspection step SP1 is assumed as a first production step, the second inspection step SP2 corresponds to a second production step that is a production step different from the first production step.

In the first inspection step SP1, while a rotary drive unit RD1 rotates a wheel of the vehicle 100 located at a given measurement position on a measurement stand MS, a toe angle, a camber angle, and/or a caster angle of the wheel of the vehicle 100 are measured by a contacting or non-contacting measuring device (not illustrated), and thereby the wheel alignment of the vehicle 100 is inspected. The rotary drive unit RD1 includes, for example, an electric roller and an endless belt. In the second inspection step SP2, a headlamp HL of the target vehicle 100 located at a given inspection position is optically inspected by using an optical sensor that detects visible light. Fig. 2 illustrates a situation in which, in the third work place PL3, a position of an optical axis, a light amount, and/or a light color of the headlamp HL of the vehicle 100B are inspected by using a headlamp tester HT having a camera with an optical sensor installed therein.

Fig. 2 illustrates a first start state SC1 that is a start state for the first inspection step SP1, and a second start state SC2 that is a start state for the second inspection step SP2. The start state is predetermined for each production step and defines a state of the vehicle 100 at a timing at which the production step is started. For example, the start state is determined as a motion state of the vehicle 100, an operation state of each unit of the vehicle 100, or a combination of the motion state and the operation state of the vehicle 100. The motion state and the operation state of the vehicle 100 in the start state may be represented by parameters.

The first start state SC1 includes a first state C1, a second state C2, a third state C3, a fourth state C4, and a fifth state C5. The first state C1 is a state in which a shift position of the vehicle 100 is in a neutral range (hereinafter, also referred to as an N range). The second state C2 is a state in which a foot brake of the vehicle 100 is not operating. The third state C3 is a state in which a parking brake of the vehicle 100 is not operating. The fourth state C4 is a state in which a steering angle of the vehicle 100 is within a predetermined reference range. Specifically, the fourth state C4 in this embodiment is a state in which the steering angle of the vehicle 100 is 0°. The fifth state C5 is a state in which a lighting device of the vehicle 100 is not turned on.

In this embodiment, the fifth state C5 included in the first start state SC1 corresponds to a state for not interfering with the second inspection step SP2 executed at the third work place PL3. In a case in which a lighting device such as the headlamp HL provided to the vehicle 100A is turned on in the first inspection step SP1, light from the lighting device may be emitted from the second work place PL2 to the third work place PL3. The light thus emitted from the second work place PL2 may be detected by the optical sensor in the second inspection step SP2 of the vehicle 100B executed at the third work place PL3. In this way, when the lighting device of the target vehicle 100 is turned on in the first inspection step SP1, the second inspection step SP2 may be interfered with.

The second start state SC2 includes a sixth state C6, a seventh state C7, and an eighth state C8. The sixth state C6 is a state in which the shift position of the vehicle 100 is in a parking range (hereinafter, also referred to as a P range). The seventh state C7 is a state in which the shift position of the vehicle 100 is in the N range immediately before the P range. That is, it can be said that the seventh state C7 is a state in which the shift position is changed to the current P range immediately after the N range. "Immediately before" and "immediately after" in this case mean that the shift position is changed between the N range and the P range without passing through another range different from the N range and the P range. The eighth state C8 is a state in which another lighting device different from the lighting device to be inspected is not turned on. The eighth state C8 included in the second start state SC2 is, for example, a state in which a fog lamp is not turned on.

As illustrated in Fig. 1, the factory FC in this embodiment includes the main line ML, a first auxiliary line SL1, and a second auxiliary line SL2. The main line ML includes the work places from the first work place PL1 to the storage place PS and the tracks from the first track TR1 to the third track TR3. In this embodiment, the main line ML corresponds to a production line. The production line is a line in the factory FC for executing each production step to the vehicle 100 while causing the vehicle 100 to run from a start point to an end point of running by unmanned driving.

The first auxiliary line SL1 is a track connecting the second work place PL2 and the first track TR1. A starting end SE1 of the first auxiliary line SL1 is connected to the second work place PL2 in the main line ML, and a terminal end EE1 of the first auxiliary line SL1 is connected to the first track TR1 in the main line ML. The first auxiliary line SL1 includes a predetermined first evacuation place EL1 for the first inspection step SP1. The second auxiliary line SL2 is a track connecting the third work place PL3 and the second track TR2. A starting end SE2 of the second auxiliary line SL2 is connected to the third work place PL3 in the main line ML, and a terminal end EE2 of the second auxiliary line SL2 is connected to the second track TR2 in the main line ML. The second auxiliary line SL2 includes a predetermined second evacuation place EL2 for the second inspection step SP2. The first auxiliary line SL1 corresponds to a return line for the first inspection step SP1. The second auxiliary line SL2 corresponds to a return line for the second inspection step SP2. The return line is, in the factory FC, a line including an evacuation place and whose starting end and terminal end are connected to the production line.

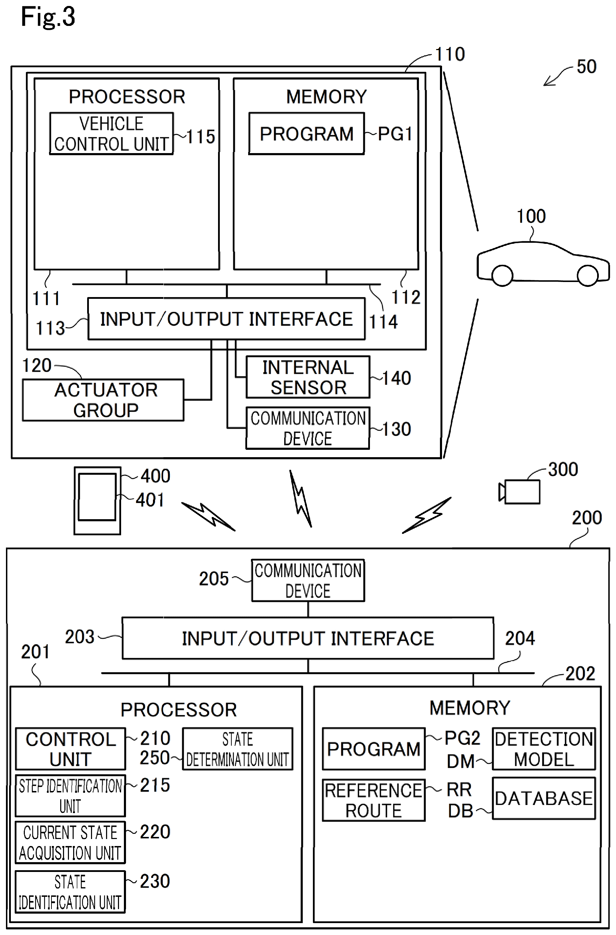

Fig. 3 is a block diagram illustrating a configuration of the system 50. The vehicle 100 includes a vehicle control device 110 to control each unit of the vehicle 100, an actuator group 120 including one or more actuators that perform driving under control of the vehicle control device 110, a communication device 130 to communicate with an external device such as the server 200 by wireless communication, and one or more internal sensors 140. The actuator group 120 includes actuators related to running of the vehicle 100, such as an actuator of a driving device that accelerates the vehicle 100, an actuator of a steering device that changes a traveling direction of the vehicle 100, and an actuator of a braking device that decelerates the vehicle 100. The driving device includes a battery, a driving motor driven by power from the battery, and a drive wheel rotated by the driving motor. The actuator of the driving device includes the driving motor. The actuator group 120 may further include actuators that operate various auxiliary machines provided to the vehicle 100 and various equipment such as a wiper, a power window, and a lamp provided to the vehicle 100.

The internal sensor 140 is a sensor installed to the vehicle 100. The internal sensor 140 may include, for example, a sensor that detects a motion state of the vehicle 100, a sensor that detects an operation state of each unit of the vehicle 100, and a sensor that detects a surrounding environment of the vehicle 100. For example, in this embodiment, the internal sensor 140 includes a shift position sensor that measures a shift position of a transmission provided to the vehicle 100 and a vehicle speed sensor that measures a vehicle speed of the vehicle 100. The internal sensor 140 may include, in addition to the shift position sensor and the vehicle speed sensor, various sensors, such as a camera, LiDAR, a millimeter-wave radar, an ultrasonic sensor, a GPS sensor, a wheel speed sensor, an acceleration sensor, a gyro sensor, and various encoders that detect operation of each unit of the vehicle 100.

Note that herein "vehicle speed" means a relative speed of the vehicle 100 with respect to a road surface where the vehicle 100 is located. This road surface includes not only a stationary road surface but also a moving road surface such as a conveyor or a roller. The vehicle speed can be detected based on a value representing a rotation speed of a wheel by using a vehicle speed sensor or a wheel speed sensor. Further, for example, the vehicle speed with respect to the stationary road surface may be calculated based on a change in position of the vehicle 100.

The vehicle control device 110 includes a computer including a processor 111, a memory 112, an input/output interface 113, and an internal bus 114. The processor 111, the memory 112, and the input/output interface 113 are coupled via the internal bus 114 in a bidirectionally communicable manner. The actuator group 120 and the communication device 130 are coupled to the input/output interface 113. The processor 111 executes a program PG1 stored in the memory 112, thus implementing various functions including a function as a vehicle control unit 115.

The vehicle control unit 115 controls the actuator group 120 to control operation of each unit of the vehicle 100. In particular, the vehicle control unit 115 controls various actuators related to running to cause the vehicle 100 to run. The vehicle control unit 115 controls the actuator group 120 using a running control signal received from the server 200 regardless of whether an occupant is in the vehicle 100, and thereby can cause the vehicle 100 to run. The running control signal is a control signal to cause the vehicle 100 to run. In this embodiment, the running control signal includes an acceleration and a steering angle of the vehicle 100 as parameters. In another embodiment, the running control signal may include a speed of the vehicle 100 as a parameter instead of or in addition to the acceleration of the vehicle 100. Further, in a case in which an occupant is in the vehicle 100, the vehicle control unit 115 can control the actuator group 120 in accordance with running operation of the occupant to cause the vehicle 100 to run.

The external sensor 300 is a sensor located outside of the vehicle 100. The external sensor 300 in this embodiment is a sensor that captures the vehicle 100 from outside of the vehicle 100. The external sensor 300 includes a communication device (not illustrated) and can communicate with another device such as the server 200 by wired communication or wireless communication. The external sensor 300 may be used to detect the surrounding environment of the vehicle 100. Specifically, the external sensor 300 includes a camera. The camera as the external sensor 300 acquires a captured image including the vehicle 100 and outputs the captured image as a detection result.

The notification unit 400 notifies a user of the system 50 of an abnormality. The user of the system 50 is, for example, a manager of the system 50 or the factory FC, or a worker in the factory FC. The notification unit 400 in this embodiment is a tablet terminal carried by the manager. The notification unit 400 notifies the user of various types of information including information on an abnormality through a display unit 401 provided to the notification unit 400. The display unit 401 in this embodiment is a touch-enabled panel (for example, a liquid crystal display or an organic EL display) and also has a function as a receiver that receives operation from the user. The notification unit 400 includes a communication device (not illustrated) and can communicate with the server 200 by wired communication or wireless communication. In another embodiment, for example, the notification unit 400 may notify the user of an abnormality through a speaker instead of or in addition to the display unit 401. The notification unit 400 may be, for example, a display panel, a warning buzzer, or a warning lamp provided to the factory FC, or may be a display device or a speaker connected to the server 200.

The server 200 includes a computer including a processor 201, a memory 202, an input/output interface 203, and an internal bus 204. The processor 201, the memory 202, and the input/output interface 203 are coupled via the internal bus 204 in a bidirectionally communicable manner. A communication device 205 to communicate with various devices located outside of the server 200 is coupled to the input/output interface 203. The communication device 205 can communicate with the vehicle 100 by wireless communication, and can communicate with each external sensor 300 by wired communication or wireless communication. The memory 202 stores various types of information including a program PG2, the reference route RR, a detection model DM, and a database DB. The processor 201 executes the program PG2 stored in the memory 202, thus implementing various functions including functions as a control unit 210, a step identification unit 215, a current state acquisition unit 220, a state identification unit 230, and a state determination unit 250. The server 200 in the first embodiment corresponds to a "control device" in the present disclosure.

The control unit 210 in this embodiment has a function of executing unmanned driving of the vehicle 100 and a function of executing state control processing and subsequent processing described later. The control unit 210 acquires a detection result of a sensor and uses the detection result to generate the running control signal to control the actuator group 120 of the vehicle 100. The control unit 210 then transmits the running control signal to the vehicle 100 to cause the vehicle 100 to run by remote control. The control unit 210 may generate and output, in addition to the running control signal, for example, control signals to control actuators that operate various auxiliary machines and various equipment such as a wiper, a power window, and a headlamp provided to the vehicle 100. That is, the control unit 210 may operate such various equipment and various auxiliary machines by remote control.

The step identification unit 215 identifies a production step to be executed to the vehicle 100. Below, the production step to be executed to the vehicle 100 is also referred to as a target production step. For example, the step identification unit 215 acquires at least one of location information and step information of the vehicle 100 regarding the target vehicle 100 that is the vehicle 100 to be controlled, and thereby identifies the target production step. The step identification unit 215 in this embodiment acquires the location information to identify the target production step. Note that when each production step is associated in advance with each work place in the factory FC, the step identification unit 215 can simply identify the position of the vehicle 100 using the location information to thereby identify the target production step. Further, for example, the step identification unit 215 may refer to, based on the location information, a database in which each place in the factory FC is associated with identification information of each production step to thereby identify the target production step. The location information may be any information that can identify the position of the vehicle 100 to such an extent that the production step that the vehicle 100 undergoes can be identified. For example, the location information may be positional coordinates of the vehicle 100. Note that, as illustrated in Fig. 1, in this embodiment, a reference coordinate system in the factory FC is a global coordinate system GC, and thereby the positional coordinates of the vehicle 100 can be represented by X, Y, and Z coordinates in the global coordinate system GC. Further, the location information may be information roughly indicating the position of the vehicle 100, and may be, for example, information indicating an area in the factory FC where the vehicle 100 is located. Further, as in this embodiment, in the case in which the position of each external sensor 300 is determined in advance, the location information may be, for example, information identifying the external sensor 300 that has captured the target vehicle 100.

The step information is information on the production step executed to the vehicle 100. For example, the step information is acquired based on information indicating an execution order of the production steps or information indicating the production step to be executed to the target vehicle 100 next. As such information indicating the execution order or the next production step, for example, log data of each production step or work record data recording a progress of each production step can be used. For example, the information indicating the execution order or the next production step may be stored in the memory 202 of the server 200, may be stored in the memory 112 of the vehicle control device 110 of the target vehicle 100, or may be stored in a computer or a recording medium outside of the target vehicle 100 and the server 200. Further, the information indicating the execution order or the next production step may be stored in association with identification information of each vehicle 100. The step information may be acquired based on the location information of the target vehicle 100. In this case, for example, information indicating each place in the factory FC and information indicating each production step executed at the corresponding place may be stored in association with each other in the memory 202, the memory 112, or an external computer or recording medium.

Referring back to Fig. 3, the current state acquisition unit 220 acquires a current state of the target vehicle 100. The current state indicates an actual state of the vehicle 100 at a timing at which acquisition of the current state is executed by the current state acquisition unit 220. For example, the current state may be acquired by using the internal sensor 140 or by using the external sensor 300.

The current state may be any state including at least a state related to the start state defined for each production step among the motion states and the operation states of the vehicle 100. That is, in this embodiment, the current state may by any state including states related to the above-mentioned first state C1 to eighth state C8. Specifically, for example, the current state includes the shift position of the vehicle 100, a state indicating whether the foot brake of the vehicle 100 is operating, a state indicating whether the parking brake of the vehicle 100 is operating, the steering angle of the vehicle 100, a history of the shift position of the vehicle 100, and a state indicating whether various lighting devices provided to the vehicle 100 are turned on. For example, the history of the shift position is generated by the processor 111 recording the shift position in the memory 112 or the like every time the shift position of the vehicle 100 is changed or at given time intervals.

The state identification unit 230 identifies the start state defined for the target production step based on at least one of the location information and the step information which have been acquired. Below, the start state identified by the state identification unit 230, that is, the start state defined for the target production step, is also referred to as a target state. In this embodiment, the state identification unit 230 uses the database DB to identify the target state.

In the database DB in this embodiment, place information indicating a place in the factory FC and the start state for the production step executed at a work place corresponding to the place are stored in association with each other. For example, in the database DB, the place information indicating the second work place PL2 is associated with the first start state SC1, which is the start state for the first inspection step SP1 executed at the second work place PL2. Similarly, the second start state SC2 is associated with the location information indicating the third work place PL3. Note that, in the database DB in this embodiment, for example, no start state is associated with the place information indicating the first track TR1, the second track TR2, and the third track TR3. In another embodiment, for example, the identification information of the production step may be further associated with the place information and the start state in the database DB. Further, for example, the database DB may include data in which each piece of place information is associated with the identification information of each production step, and data in which the identification information of each production step is associated with each start state.

Below, the work place for executing the target production step is also referred to as a target work place. A production step executed before the target production step is also referred to as a pre-step. A production step executed after the target production step is also referred to as a post-step. For example, when the target production step is the first inspection step SP1, the assembly step corresponds to the pre-step. In this case, the second inspection step SP2 corresponds to the post-step.

When the target state is identified by the state identification unit 230, the control unit 210 executes state control processing. The state control processing is processing of controlling the vehicle 100 in such a manner that the state of the vehicle 100 becomes the target state. Specifically, the state control processing in this embodiment is processing of commanding the target vehicle 100 in such a manner that the state of the target vehicle 100 becomes the target state. The state determination unit 250 executes determination processing after execution of the state control processing. The determination processing is processing of determining whether the state of the vehicle 100 is the target state.

The control unit 210 in this embodiment executes subsequent processing when the state of the vehicle 100 is different from the target state in the determination processing. The subsequent processing is processing of executing at least one of stop processing, evacuation processing, and notification processing. The evacuation processing is processing of evacuating the vehicle 100 to an evacuation place predetermined for the target production step. The stop processing is processing of stopping running of the vehicle 100. The notification processing is processing of giving notification of an abnormality.

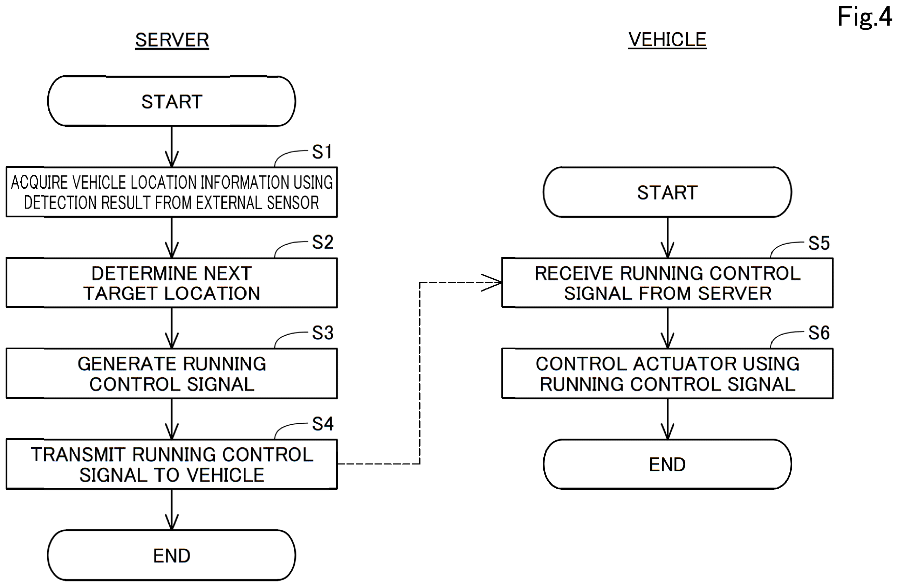

Fig. 4 is a flowchart illustrating a procedure of running control of the vehicle 100 according to the first embodiment. In the procedure in Fig. 4, the processor 201 of the server 200 executes the program PG2 to function as the control unit 210, thus remotely controlling the vehicle 100. Further, the processor 111 of the vehicle 100 executes the program PG1, thus functioning as the vehicle control unit 115.

In step S1, the processor 201 of the server 200 acquires vehicle location information using detection result output from the external sensor 300. The vehicle location information is locational information as a basis for generating a running control signal. In the present embodiment, the vehicle location information includes the location and orientation of the vehicle 100 in a reference coordinate system of the factory FC. In particular, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 50 or outside the system 50. The detection model is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system. The memory 202 of the server 200 contains a reference route stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.dition to the acceleration of the vehicle 100.

In step S4, processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

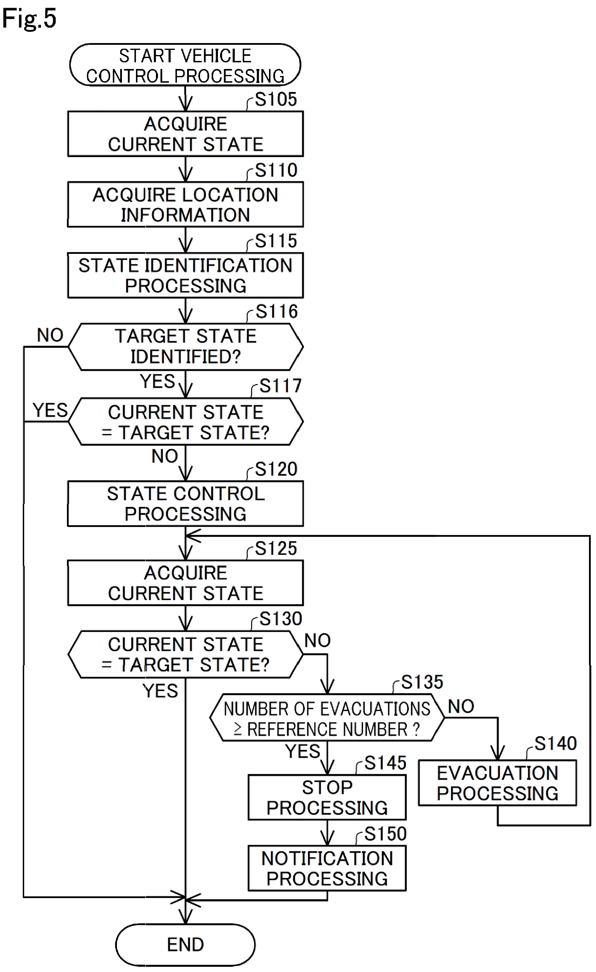

Fig. 5 is a flowchart illustrating a procedure of vehicle control processing to implement a method for controlling the vehicle 100 according to this embodiment. For example, the vehicle control processing in Fig. 5 is executed at given time intervals. In the vehicle control processing in Fig. 5, the processor 201 of the server 200 executes the program PG2, thus functioning as the control unit 210, the step identification unit 215, the current state acquisition unit 220, the state identification unit 230, and the state determination unit 250.

In Step S105, the current state acquisition unit 220 acquires the current state of the target vehicle 100. In Step S105, for example, the current state acquisition unit 220 may receive the detection result of the internal sensor 140 from the target vehicle 100 to acquire the current state of the target vehicle 100. For example, the current state acquisition unit 220 may use the detection result of the external sensor 300 to acquire the current state of the target vehicle 100. In this case, for example, the current state acquisition unit 220 may analyze the image captured by the camera as the external sensor 300 to thereby acquire the current state. In Step S105, the current state acquisition unit 220 causes the memory 202 to store the acquired current state in association with the identification information of the target vehicle 100.

In Step S110, the step identification unit 215 identifies the target production step. Specifically, in Step S110, the step identification unit 215 acquires the location information of the target vehicle 100 to identify the target production step. In this embodiment, the step identification unit 215 acquires vehicle location information of the target vehicle 100 as the location information of the target vehicle 100. Below, the step of identifying the target production step as in Step S110 is also referred to as a step identification step.

In Step S115, the state identification unit 230 executes state identification processing for identifying the target state. Specifically, in Step S115, the state identification unit 230 identifies the target state with reference to the database DB based on the location information of the target vehicle 100 acquired in Step S110. Below, the step of identifying the target state as in Step S115 is also referred to as a state identification step. For example, in a case in which the location information indicating the second work place PL2 is acquired in Step S110, in Step S115, the state identification unit 230 can identify the first start state SC1 associated with the second work place PL2 as the target state, with reference to the database DB based on the location information. That is, in this case, acquiring the location information indicating the second work place PL2 in Step S110 corresponds to identifying the first inspection step SP1 as the target production step. Note that in a case in which location information indicating a place not associated with a start state, such as the first track TR1, the second track TR2, and the third track TR3, is acquired in Step S110, the target production step is not identified in Step S110, and the target state is not identified in Step S115.

In Step S116, the state identification unit 230 determines whether the target state is identified. If the target state is not identified in Step S116, the processor 201 ends the vehicle control processing. If the target state is identified in Step S116, in Step S117, the state determination unit 250 determines whether the current state acquired in Step S105 is the identified target state.

In another embodiment, the current state of the vehicle 100 may be acquired after the state identification step. In this case, the current state may be any state including at least a state related to the target state identified in the state identification step in each start state for the corresponding production step.

If the current state is different from the target state in Step S117, in Step S120, the control unit 210 executes the state control processing for the target vehicle 100. Specifically, the control unit 210 generates a control command to bring the state of the target vehicle 100 into the target state identified in Step S115, and transmits the generated control command to the target vehicle 100. When the state control processing is executed in Step S120, the target vehicle 100 controls the actuator group 120 provided to the target vehicle 100 based on the transmitted control command. As a result, the state of the target vehicle 100 becomes the target state. Below, the step of controlling the vehicle 100 in such a manner that the state of the vehicle 100 becomes the target state as in Step S120 is also referred to as a state control step.

For example, when the target production step is the first inspection step SP1, in Step S120, the control unit 210 commands the target vehicle 100 in such a manner that the target vehicle 100 becomes the first start state SC1. Specifically, in this case, the control unit 210 generates, for example, a control command to change the shift position of the target vehicle 100 to the N range at the measurement position of the wheel alignment, a control command to cancel operation of the foot brake of the target vehicle 100 at the measurement position, a control command to cancel operation of the parking brake of the target vehicle 100 at the measurement position, a control command to make the steering angle of the target vehicle 100 zero at the measurement position, and a control command to turn off the lighting device of the target vehicle 100 by the time the target vehicle 100 reaches the measurement position, and transmits the generated control commands to the target vehicle 100. Further, when the target production step is the second inspection step SP2, in Step S120, the control unit 210 commands the vehicle 100B in such a manner that the target vehicle 100 becomes the second start state SC2. Specifically, in this case, the control unit 210 generates, for example, a control command to change the shift position of the target vehicle 100 to the N range at the inspection position of the headlamp HL and change the shift position to the P range immediately thereafter, and a control command to turn off the fog lamp of the target vehicle 100 by the time the target vehicle 100 reaches the inspection position, and transmits the generated control commands to the target vehicle 100. Note that such a control command may include, for example, a control command to move the target vehicle 100 to a given work position. For example, the control command transmitted to the target vehicle 100 to bring the target vehicle 100 into the first start state SC1 may include the running control signal to move the target vehicle 100 to the measurement position on the measurement stand MS. The control commands may be transmitted to the vehicle 100 collectively or separately.

If the current state is the target state in Step S117, the processor 201 ends the vehicle control processing. That is, in the vehicle control processing in this embodiment, if the current state is the target state in Step S117, the control unit 210 does not execute the state control processing. Note that, in this case, even when the state control processing is not executed by the control unit 210, the state of the target vehicle 100 is the target state, and thereby the target production step is appropriately executed to the target vehicle 100.

In Step S125, the current state acquisition unit 220 re-acquires the current state of the target vehicle 100. In Step S130, the state determination unit 250 executes the determination processing. Specifically, in Step S130, the state determination unit 250 determines whether the current state re-acquired in Step S125 is the target state identified in Step S115. That is, the determination processing in this embodiment corresponds to processing of determining whether the state of the target vehicle 100 has changed to the target state by the state control processing. Note that, in Step S130 in this embodiment, the state determination unit 250 determines that the current state is not the target state also when the current state is not acquired within a given time in Step S125. Such delay or failure in acquisition of the current state may be caused by, for example, communication delay or communication failure between the vehicle 100 and the server 200.

If the current state is not the target state in Step S130, in Step S135, the control unit 210 determines whether the number of executions of the evacuation processing for the target vehicle 100 is equal to or less than a predetermined reference number. Below, the number of executions of the evacuation processing is also referred to as the number of evacuations. In this embodiment, the reference number is two or more. In another embodiment, the reference number may be, for example, one.

If the number of evacuations is equal to or less than the reference number in Step S135, in Step S140, the control unit 210 executes the evacuation processing. In the evacuation processing in this embodiment, the control unit 210 commands the vehicle 100 in such a manner that the target vehicle 100 moves to the target work place through the return line connected to the production line and the state of the target vehicle 100 becomes the target state.

For example, when the target production step is the first inspection step SP1, in Step S140, the control unit 210 commands the target vehicle 100 in such a manner that the target vehicle 100 moves to the second work place PL2 through the first auxiliary line SL1 and the state of the target vehicle 100 becomes the first start state SC1. In this case, the control unit 210 first transmits the running control signal to the target vehicle 100 to cause the target vehicle 100 to run to the second work place PL2 through the first auxiliary line SL1 and the main line ML. Next, the control unit 210 transmits to the target vehicle 100 the control command to bring the state of the target vehicle 100 into the first start state SC1.

Further, for example, when the target production step is the second inspection step SP2, in Step S140, the control unit 210 commands the target vehicle 100 in such a manner that the target vehicle 100 moves to the third work place PL3 through the second auxiliary line SL2 and the state of the target vehicle 100 becomes the second start state SC2. In this case, the control unit 210 first transmits the running control signal to the target vehicle 100 to cause the target vehicle 100 to run to the third work place PL3 through the second auxiliary line SL2 and the main line ML. Next, the control unit 210 transmits to the target vehicle 100 the control command to bring the state of the target vehicle 100 into the second start state SC2.

After execution of the evacuation processing, the processor 201 returns the processing to Step S125. Thereafter, Step S125 and Step S130 are executed again. In re-executed Step S130, the determination processing is executed again, and whether the current state of the target vehicle 100 acquired in re-executed Step S125 is the target state is determined. Below, the re-executed determination processing, that is, the determination processing executed for the second time or thereafter in this manner is also referred to as re-determination processing. In Step S130 executed previously, for example, when it is determined that the current state of the target vehicle 100 is not the target state due to a temporary abnormality in the system 50, in re-executed Step S130, there is a high probability that the current state of the target vehicle 100 is determined to be the target state. The temporary abnormality is, for example, temporary communication failure between the target vehicle 100 and a device outside of the target vehicle 100, or temporary failure related to transmission and reception of a signal in the target vehicle 100. On the other hand, for example, in Step S130 executed previously, when it is determined that the current state of the target vehicle 100 is not the target state due to a non-temporary abnormality in the system 50, in re-executed Step S130, there is a low probability that the current state of the target vehicle 100 is determined to be the target state. The non-temporary abnormality is, for example, non-temporary communication failure, disconnection of each wire in the target vehicle 100, or malfunction of the actuator group 120 of the target vehicle 100.

Further, if it is determined that the current state of the target vehicle 100 is not the target state in re-executed Step S130, Step S135 is executed again. Then, if the number of evacuations is equal to or less than the reference number in Step S135, in Step S140, the evacuation processing is executed again. That is, in this embodiment, in the case in which the number of evacuations is equal to or less than the reference number, the evacuation processing is executed again when the state of the target vehicle 100 is not the target state in the re-determination processing. In this way, in this embodiment, when the state of the target vehicle 100 is not the target state in the determination processing, the evacuation processing is repeatedly executed until the number of evacuations exceeds the reference number.

If the number of evacuations is greater than the reference number in Step S135, in Step S145, the control unit 210 executes the stop processing. In Step S145, for example, the control unit 210 transmits to the target vehicle 100 the running control signal to brake the target vehicle 100. In Step S150, the control unit 210 executes the notification processing using the notification unit 400. When the number of evacuations is greater than the reference number, as compared with the case in which the number of evacuations is equal to or less than the reference number, there is a higher probability that the state of the target vehicle 100 does not become the target state due to the above-mentioned non-temporary abnormality. Therefore, in this embodiment, it can be said that the stop processing and the notification processing are executed when there is a higher probability that the target state is not realized due to a non-temporary abnormality.

After execution of Step S150, the control unit 210 resets the count of the number of evacuations. Note that the control unit 210 resets the count of the number of evacuations also when the current state is the target state in Step S130.

According to the system 50 in this embodiment described above, the target state, which is the start state for the target production step to be executed to the vehicle 100, is identified, and the target vehicle 100 is controlled in such a manner that the state of the target vehicle 100 becomes the target state. Therefore, a possibility that the production step is appropriately executed can be increased.

Moreover, in this embodiment, the control unit 210 does not execute the state control processing when the current state of the target vehicle 100 is the target state. Therefore, an increase in processing load due to unnecessary processing can be suppressed.

Note that in another embodiment the control unit 210 may command the target vehicle 100 in the state control processing of Step S120 in such a manner that only a part of the current state different from the target state is changed. The "part different from the target state" does not mean a physical part such as a specific portion of the vehicle 100, but means a part of the state of the vehicle 100. For example, when the target production step is the first inspection step SP1, and the state of the target vehicle 100 matches the first state C1 to the fourth state C4 but does not match the fifth state C5, the control unit 210 may generate a control command not including a control signal to change the state of the target vehicle 100 to the first state C1, the second state C2, the third state C3, and the fourth state C4 but including a control signal to change the state of the target vehicle 100 to the fifth state C5, and may transmit the generated control command to the target vehicle 100. That is, in this case, the control unit 210 may transmit to the target vehicle 100 the control command not including the control signal to control the shift position, the operation state of the brake, and the steering angle, but including the control signal to turn off the headlamp HL. In this way, changing only a part of the current state different from the target state can bring the state of the target vehicle 100 into the target state. Therefore, for example, it is possible to further reduce a processing load accompanying generation, transmission, and reception of the control command to bring the state of the target vehicle 100 into the target state.

Moreover, in this embodiment, after execution of the state control processing, the determination processing of determining whether the state of the target vehicle 100 is the target state is executed. Then, when the state of the target vehicle 100 is not the target state in the determination processing, at least one of the stop processing, the evacuation processing, and the notification processing is executed. Therefore, for example, execution of the stop processing can eliminate an abnormality that prevents the state of the target vehicle 100 from becoming the target state while stopping the target vehicle 100. Further, for example, execution of the notification processing enables the user (for example, the manager or the worker) notified of an abnormality to take a measure to eliminate the abnormality. Further, for example, execution of the evacuation processing can suppress interference with the production step of the subsequent vehicle 100 due to the target vehicle 100. In this way, for the target vehicle 100 and the vehicle 100 subsequent to the target vehicle 100, a possibility that the production step is appropriately executed can be increased.

Moreover, in this embodiment, in the evacuation processing, the control unit 210 commands the target vehicle 100 in such a manner that the target vehicle 100 moves to the target work place through the return line and the state of the target vehicle 100 becomes the target state. In this way, when the state of the target vehicle 100 is not the target state after execution of the state control processing, the target vehicle 100 can be evacuated. Further, since the target vehicle 100 moves to the target work place through the return line different from the production line, interference between the target vehicle 100 and the subsequent vehicle 100 can be suppressed. Therefore, for the target vehicle 100 and the subsequent vehicle 100, a possibility that the production step is appropriately executed can be increased further.

Moreover, in this embodiment, after execution of the evacuation processing, the re-determination processing is executed, and the evacuation processing is executed again when the state of the target vehicle 100 is not the target state in the re-determination processing. Therefore, a possibility that the production step is appropriately executed can be increased further.

Moreover, in this embodiment, when the number of evacuations is equal to or less than the reference number, the stop processing and the notification processing are not executed, and when the number of evacuations is greater than the reference number, at least one of the stop processing and the notification processing is executed. In this way, when the number of evacuations is equal to or less than the reference number, the evacuation processing is repeatedly executed until the state of the vehicle 100 becomes the target state, and when the number of evacuations is greater than the reference number, the stop processing and/or the notification processing is executed. That is, when there is a comparatively high probability that the state of the vehicle 100 is not the target state due to a temporary abnormality in the system 50, the evacuation processing can be repeatedly executed while causing the vehicle 100 to run until the state of the vehicle 100 becomes the target state, and when there is a comparatively high probability that the state of the vehicle 100 is not the target state due to a non-temporary abnormality in the system 50, the stop processing and/or the notification processing can be executed. Therefore, the production step can be more efficiently executed, and a possibility that the production step is appropriately executed can be increased.

Moreover, in this embodiment, the first start state SC1, which is the start state for the first inspection step SP1, includes the state of the vehicle 100 for not interfering with the second inspection step SP2. Therefore, it is possible to suppress interference with the second inspection step SP2 due to the first inspection step SP1, increasing a possibility that each inspection step is appropriately executed.

Moreover, in this embodiment, the second work place PL2 and the third work place PL3 are adjacent to each other in the factory FC. Therefore, a possibility that each inspection step is appropriately executed can be effectively increased.

Moreover, in this embodiment, the second inspection step SP2 is a post-step of the first inspection step SP1. Therefore, a possibility that each inspection step is appropriately executed can be more effectively increased.

Note that in another embodiment the second work place PL2 and the third work place PL3 may not be adjacent to each other. Further, the second inspection step SP2 may not be a post-step of the first inspection step SP1. Even in these cases, the first start state SC1 includes the state of the vehicle 100 for not interfering with the second inspection step SP2, and thereby it is possible to suppress interference with the second inspection step SP2 due to the first inspection step SP1, increasing a possibility that each inspection step is appropriately executed.

Moreover, in this embodiment, the second inspection step SP2 is the step of executing work using an optical sensor, and the first start state SC1, which is the start state for the first inspection step SP1, includes that the lighting device of the target vehicle 100 is not turned on. Therefore, it is possible to suppress interference with the work executed at the third work place PL3 due to light emitted from the lighting device of the target vehicle 100 present at the second work place PL2.

Note that in another embodiment the step of executing work using an optical sensor may not be the headlamp inspection step, and may be another production step using an optical sensor. For example, the step of executing work using an optical sensor may be work using an optical sensor provided to the vehicle 100. In this case, the step of executing work using an optical sensor may be a step of optically inspecting a camera provided to the vehicle 100, or a step of causing a computer such as the vehicle control device 110 to execute various learning processes by using a camera provided to the vehicle 100. The learning process in this case may be, for example, a learning process to generate a three-dimensional image or a panoramic image using images captured by a plurality of cameras as input images, or may be a learning process to generate an object detection model that detects an object included in an image.

Moreover, in this embodiment, the first start state SC1, which is the start state of the wheel alignment inspection step as the first inspection step SP1, includes the first state C1 in which the shift position is in the N range, the second state C2 in which the foot brake is not operating, the third state C3 in which the parking brake is not operating, and the fourth state C4 in which the steering angle is within the reference range. Therefore, inspection of the wheel alignment of the vehicle 100 can be appropriately executed by utilizing unmanned driving.

Moreover, in this embodiment, the second start state SC2, which is the start state of the headlamp inspection step as the second inspection step SP2, includes the sixth state C6 in which the shift position is in the P range. In this way, for example, as compared with a case in which the second start state SC2 includes the first state C1, not the sixth state C6, the wheel of the target vehicle 100 is more firmly secured during the headlamp inspection step, and thereby displacement of the optical axis of the headlamp HL during the headlamp inspection step can be more suppressed. Therefore, inspection of the headlamp HL can be appropriately executed by utilizing unmanned driving.

Moreover, in this embodiment, the second start state SC2 includes the seventh state C7 in which the shift position is in the N range immediately before the P range. For example, when the shift position of the vehicle 100 is simply changed from a drive range (hereinafter, also referred to as a D range) to the P range, there is a possibility that the wheel of the vehicle 100 is secured in a state in which influence of the latest running state of the vehicle 100 is reflected. In contrast, when the shift position of the vehicle 100 is changed to the P range immediately after the N range, the shift position of the vehicle 100 can be changed to the P range while suppressing securing of the wheel of the vehicle 100 in the state in which influence of the latest running state is reflected. Therefore, the second start state SC2 including the seventh state C7 can more suppress variation in inspection conditions during the headlamp inspection step, and thereby inspection of the headlamp HL can be more appropriately executed.

Note that in another embodiment the first start state SC1 may include other states in addition to or instead of each state described above. Further, the second start state SC2 may include other states in addition to or instead of each state described above.

### B. Second Embodiment:

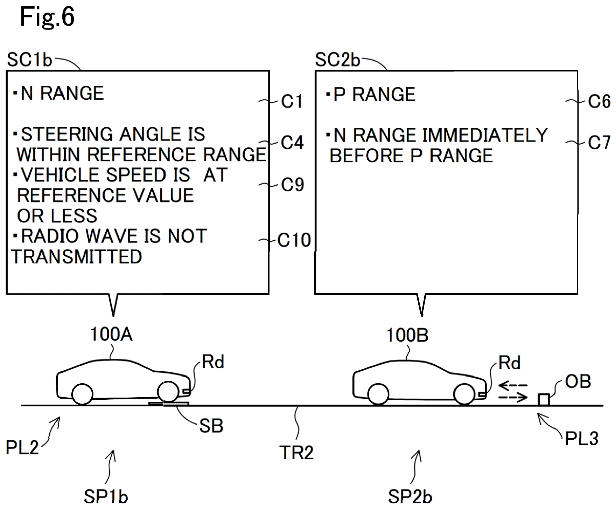

Fig. 6 is a diagram illustrating a first inspection step SP1b and a second inspection step SP2b according to a second embodiment. Fig. 6 illustrates a situation in which the first inspection step SP1b is executed to the vehicle 100A and the second inspection step SP2b is executed to the vehicle 100B. This embodiment is different from the first embodiment in that the first inspection step SP1b is a side-slip inspection step of inspecting a side-slip amount of the vehicle 100. Further, the second inspection step SP2b is a radar inspection step of inspecting a radar Rd provided to the vehicle 100. The radar Rd is, for example, a millimeter-wave radar. The second inspection step SP2b corresponds to a production step of executing work using the radar Rd. Other configurations in this embodiment are the same as those in the first embodiment unless otherwise specified.

For example, in the first inspection step SP1b, the target vehicle 100 is caused to pass on a side-slip board SB having a potentiometer and a load cell to detect a side-slip amount at a vehicle speed equal to or less than a predetermined value, and thereby the side-slip amount of the target vehicle 100 is detected. Further, for example, in the second inspection step SP2b, the radar Rd of the target vehicle 100 is caused to detect a target object OB located outside of the target vehicle 100, and thereby the radar Rd is inspected. Specifically, in this case, a radio wave is transmitted from a transmitter of the radar Rd to the target object OB, and a radio wave reflected on the target object OB is received by a receiver of the radar Rd.

As illustrated in Fig. 6, a first start state SC1b in this embodiment includes the first state C1, the fourth state C4, a ninth state C9, and a tenth state C10. The ninth state C9 is a state in which the vehicle speed of the vehicle 100 is equal to or less than a predetermined reference value. The tenth state C10 is a state in which a radio wave is not transmitted from the radar Rd of the target vehicle 100. Note that the reference range for the fourth state C4 in the side-slip inspection step may be the same as or different from the reference range for the fourth state C4 in the alignment inspection step. The fourth state C4 in this embodiment is a state in which the steering angle is 0°. Further, a second start state SC2b includes the sixth state C6 and the seventh state C7.

In this embodiment, the tenth state C10 included in the first start state SC1b corresponds to a state of the vehicle 100 for not interfering with the second inspection step SP2b executed at the third work place PL3. When a radio wave is transmitted from the radar Rd provided to the vehicle 100A in the first inspection step SP1b, the radio wave from the radar Rd may reach the third work place PL3 from the second work place PL2. The radio wave reaching the third work place PL3 from the second work place PL2 in this way may be received by the radar Rd provided to the vehicle 100B, for example, in the radar inspection step of the vehicle 100B executed at the third work place PL3. Thus, transmission of a radio wave from the radar Rd of the target vehicle 100 in the first inspection step SP1b may interfere with the second inspection step SP2b.

In this embodiment, similarly to the first embodiment, the vehicle control processing in Fig. 5 is executed. For example, when the target production step is the first inspection step SP1b, in Step S120, the control unit 210 transmits to the target vehicle 100, for example, a control command to change the shift position of the target vehicle 100 to the N range at a predetermined inspection start position for the side-slip inspection step, a control command to make the vehicle speed of the target vehicle 100 equal to or less than the predetermined value by the time the target vehicle 100 reaches the inspection start position, a control command to make the steering angle of the target vehicle 100 zero at the inspection start position, and a control command to turn off the lighting device of the target vehicle 100 by the time the target vehicle 100 reaches a measurement position. For example, the inspection start position is a position before the side-slip board SB. Further, when the target production step is the second inspection step SP2b, in Step S120, the control unit 210 transmits to the target vehicle 100, for example, a control command to change the shift position of the target vehicle 100 to the N range at an inspection position for the radar inspection step and change the shift position to the P range immediately thereafter.

According to the system 50 in this embodiment described above, the second inspection step SP2b is the step of executing work using the radar Rd provided to the vehicle 100, and the first start state SC1b, which is the start state for the first inspection step SP1b, includes the tenth state C10 in which a radio wave is not transmitted from the target vehicle 100. Therefore, it is possible to suppress interference with the production step executed at the third work place PL3, due to a radio wave transmitted from the radar Rd of the target vehicle 100 present at the second work place PL2.

Note that in another embodiment the step of executing work using the radar Rd may not be the radar inspection step, and may be another production step using the radar Rd. For example, this step may be a step of causing a computer such as the vehicle control device 110 to execute various learning processes using the radar Rd. The learning process in this case may be, for example, a learning process to generate an object detection model that detects presence or a type of an object based on reception data generated through reception of a radio wave by the radar Rd.

Moreover, in this embodiment, the first start state SC1b, which is the start state for the side-slip inspection step as the first inspection step SP1b, includes the ninth state C9 in which the vehicle speed of the target vehicle 100 is equal to or less than the reference value, the first state C1 in which the shift position is in the N range, and the fourth state C4 in which the steering angle is within the reference range. Therefore, side-slip inspection of the vehicle 100 can be appropriately executed by utilizing unmanned driving.

Moreover, in this embodiment, the second start state SC2b, which is the start state for the radar inspection step as the second inspection step SP2b, includes the sixth state C6 and the seventh state C7. Therefore, radar inspection of the vehicle 100 can be appropriately executed by utilizing unmanned driving.

Note that in another embodiment the first start state SC1b may include other states in addition to or instead of each state described above. Further, the second start state SC2b may include other states in addition to or instead of each state described above.

### C. Third Embodiment:

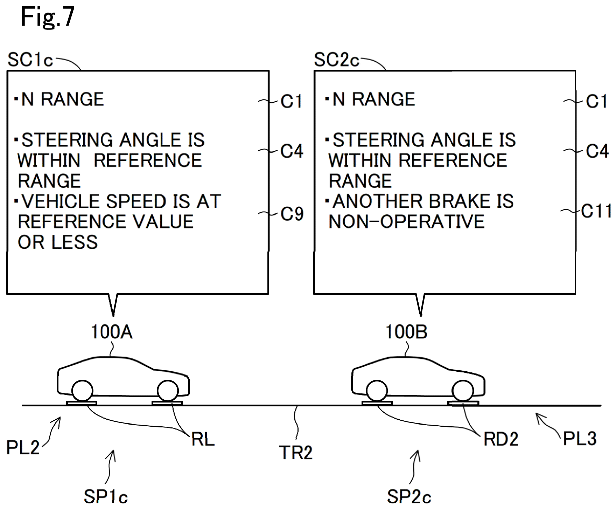

Fig. 7 is a diagram illustrating a first inspection step SP1c and a second inspection step SP2c according to a third embodiment. Fig. 7 illustrates a situation in which the first inspection step SP1c is executed to the vehicle 100A and the second inspection step SP2c is executed to the vehicle 100B. This embodiment is different from the first embodiment in that the first inspection step SP1c is a drum test step of inspecting an acceleration device of the vehicle 100 by using a rotatable roller RL. Further, the second inspection step SP2c is a brake inspection step of inspecting braking force of a braking device of the vehicle 100. Other configurations in this embodiment are the same as those in the first embodiment unless otherwise specified.

In the first inspection step SP1b, the target vehicle 100 is caused to run on the rotating roller RL, and thereby the acceleration device of the target vehicle 100 is inspected. Specifically, in the first inspection step SP1b, a vehicle speed and/or an acceleration of the target vehicle 100 are detected based on a rotation speed of the roller RL rotated by running of the target vehicle 100 while the target vehicle 100 is caused to run on the roller RL, and thereby the acceleration device of the target vehicle 100 is inspected. For example, in the second inspection step SP2b, while a rotary drive unit RD2 applies rotational force to a wheel of the vehicle 100 located at a given measurement position, a brake to be inspected among brakes of the target vehicle 100 is actuated, and thereby braking force of the brake to be inspected is inspected. For example, braking force is measured based on a detection result of a torque sensor that detects a torque of the rotary drive unit RD2. The second inspection step SP2c in this embodiment is a step of inspecting the foot brake. That is, the brake to be inspected is the foot brake.

As illustrated in Fig. 7, a first start state SC1c in this embodiment includes the fourth state C4 and the ninth state C9. Further, a second start state SC2c includes the first state C1, the fourth state C4, and an eleventh state C11. The eleventh state C11 is a state in which a brake different from the brake to be inspected is not operating. Specifically, the eleventh state C11 in this embodiment is a state in which the parking brake is not operating. Note that, in another embodiment, in a case in which the brake to be inspected is the parking brake, the eleventh state C11 is, for example, a state in which the foot brake is not operating. Further, the reference ranges for the fourth state C4 in the drum test step and the brake inspection step may be different from each other, and may be different from the reference ranges for the fourth state C4 in the side-slip inspection step and the alignment inspection step. Each fourth state C4 in this embodiment is a state in which the steering angle is 0°. The reference value for the ninth state C9 in the drum test step may be different from the reference value for the ninth state C9 in the side-slip step. In this embodiment, the reference value for the ninth state C9 in the side-slip step is zero.

In this embodiment, similarly to the first embodiment, the vehicle control processing in Fig. 5 is executed. For example, when the target production step is the first inspection step SP1c, in Step S120, the control unit 210 transmits to the target vehicle 100, for example, a control command to change the shift position of the target vehicle 100 to the N range at a predetermined measurement position for the drum test step, a control command to make the steering angle of the target vehicle 100 zero at the measurement position, and a control command to stop the target vehicle 100 at the measurement position. Further, when the target production step is the second inspection step SP2c, in Step S120, the control unit 210 transmits to the target vehicle 100, for example, a control command to change the shift position of the target vehicle 100 to the N range at a predetermined inspection position for the brake inspection step, a control command to make the steering angle of the target vehicle 100 zero at the inspection position, and a control command to cancel the parking brake of the target vehicle 100 by the time the target vehicle 100 reaches the inspection position.

According to the system 50 in this embodiment described above, the first start state SC1c, which is the start state for the drum test step as the first inspection step SP1c, includes the ninth state C9 in which the vehicle speed is equal to or less than the reference value and the fourth state C4 in which the steering angle is within the reference range. Therefore, inspection of the acceleration device of the vehicle 100 can be appropriately executed by utilizing unmanned driving.

Moreover, in this embodiment, the second start state SC2c, which is the start state for the brake inspection step as the second inspection step SP2c, includes the eleventh state C11 in which a brake different from the brake to be inspected is not operating in the target vehicle 100, the first state C1 in which the shift position is in the N range, and the fourth state C4 in which the steering angle is within the reference range. Therefore, inspection of the braking device of the vehicle 100 can be appropriately executed by utilizing unmanned driving.

Note that in another embodiment the first start state SC1c may include other states in addition to or instead of each state described above. Further, the second start state SC2c may include other states in addition to or instead of each state described above.

### D. Fourth Embodiment:

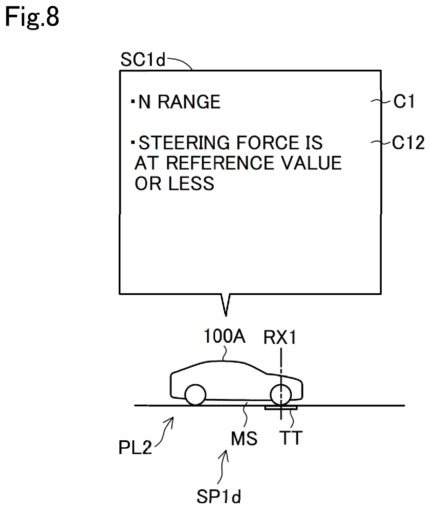

Fig. 8 is a diagram illustrating a first inspection step SP1d according to a fourth embodiment. Fig. 8 illustrates a situation in which the first inspection step SP1d is executed to the vehicle 100A. This embodiment is different from the first embodiment in that the first inspection step SP1d is an angle test step of inspecting a steering angle of a steering device of the vehicle 100. Other configurations in this embodiment are the same as those in the first embodiment unless otherwise specified.

In the first inspection step SP1d, in a state in which a drive wheel of the target vehicle 100 is located on a rotary table TT, a maximum steering angle of the steering device of the target vehicle 100 is inspected using the rotary table TT. The rotary table TT is rotatable about a rotation axis RX1 along a vertical line.

As illustrated in Fig. 8, a first start state SC1d in this embodiment includes the first state C1 and a twelfth state C12. The twelfth state C12 is a state in which a steering force applied to the steering device of the target vehicle 100 is equal to or less than a predetermined reference value. Specifically, the reference value for the twelfth state C12 in this embodiment is zero. That is, the twelfth state C12 in this embodiment corresponds to a state in which no steering force is applied to the steering device of the target vehicle 100.

In this embodiment, similarly to the first embodiment, the vehicle control processing in Fig. 5 is executed. For example, when the target production step is the first inspection step SP1d, in Step S120, the control unit 210 transmits to the target vehicle 100, for example, a control command to change the shift position of the target vehicle 100 to the N range at a predetermined inspection position for the angle test step, and a control command to make the steering force of the steering device of the target vehicle 100 zero at the inspection position.

According to the system 50 in this embodiment described above, the first start state SC1d, which is the start state for the angle test step as the first inspection step SP1d, includes the first state C1 in which the shift position is in the N range and the twelfth state C12 in which the steering force applied to the steering device is equal to or less than the reference value. Therefore, the angle test step of the vehicle 100 can be appropriately executed by utilizing unmanned driving.

Note that in another embodiment the first start state SC1d may include other states in addition to or instead of each state described above.

### E. Fifth Embodiment:

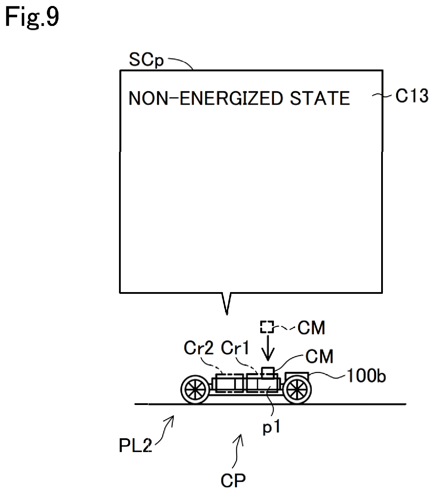

Fig. 9 is a diagram illustrating a production step executed at the second work place PL2 according to a fifth embodiment. This embodiment is different from the first embodiment in that a component connection step CP is executed instead of the inspection step as the production step at the second work place PL2. Other configurations in this embodiment are the same as those in the first embodiment unless otherwise specified.

The component connection step CP is a step of electrically connecting a predetermined component to a predetermined portion of a target vehicle 100b. Fig. 9 illustrates a situation in which the component connection step CP is executed to the target vehicle 100b in a form of a platform. Specifically, Fig. 9 illustrates a situation in which a component CM to be attached is installed from outside of the target vehicle 100b, and the component CM is electrically connected to a first portion p1 of the target vehicle 100b. Note that in Fig. 9 the component CM before being installed to the target vehicle 100b is indicated by a broken line, and the component CM after being installed and electrically connected to the target vehicle 100b is indicated by a solid line. For example, the component CM may be various types of electronic components or electric components. Further, for example, the component CM may be installed and electrically connected to the vehicle 100b while forming an arbitrary electrical component together with various other components. Further, for example, the component connection step CP may be executed by a worker, may be executed by a device such as a robot, or may be executed by both of them. Below, among portions of the vehicle 100, the portion to which the component CM is to be electrically connected is also referred to as a target portion. That is, in this embodiment, the first portion p1 corresponds to the target portion.

As illustrated in Fig. 9, a third start state SCp, which is the start state for the component connection step CP, includes a non-energized state C13. The non-energized state C13 is a state in which power is not supplied to the target portion. That is, the non-energized state C13 in this embodiment is a state in which power is not supplied to the first portion p1.

In this embodiment, similarly to the first embodiment, the vehicle control processing in Fig. 5 is executed. For example, when the target production step is the component connection step CP, in Step S120, the control unit 210 transmits to the target vehicle 100b, for example, a control command to make the target vehicle 100b the non-energized state C13 at a predetermined attachment position. The vehicle 100b having received this control command controls actuators such as various switches provided to the target vehicle 100b in such a manner that, for example, a circuit Cr1 including the first portion p1 is electrically disconnected from a power supply device provided to the target vehicle 100b or a power supply outside of the target vehicle 100b. Note that in this case it is only necessary that power is not supplied to the first portion p1, and for example, power may be supplied to a circuit Cr2 or the like not including the first portion p1.

According to the system 50 in this embodiment described above, the third start state SCp, which is the start state for the component connection step CP, includes the non-energized state C13. In this way, when the component CM is attached to the vehicle 100b, failure of the attached component CM due to power supply to the target portion can be suppressed. Therefore, the step of attaching the component CM to the vehicle 100b can be appropriately executed by utilizing unmanned driving of the vehicle 100b.

Note that in another embodiment the third start state SCp may include other states in addition to or instead of the non-energized state C13.

### F. Sixth Embodiment:

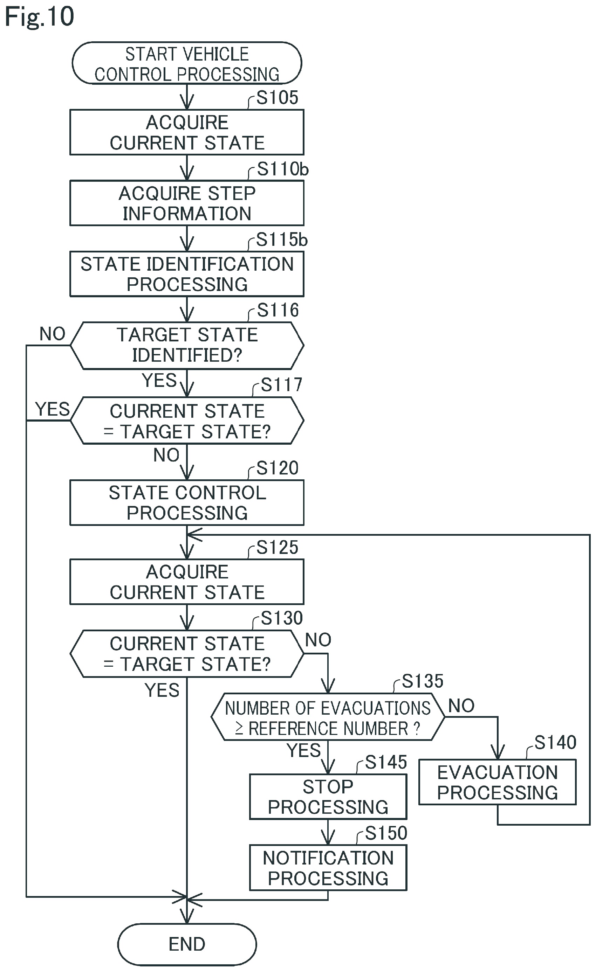

Fig. 10 is a flowchart illustrating a procedure of vehicle control processing to implement a method for controlling the vehicle 100 according to a sixth embodiment. This embodiment is different from the first embodiment in that the step information is acquired instead of the location information in Step S110b in Fig. 10. Other configurations in this embodiment are the same as those in the first embodiment unless otherwise specified.

In Step S110b, the step identification unit 215 acquires the step information of the target vehicle 100 to identify the target production step. In Step S110b in this embodiment, the step identification unit 215 acquires the step information of the target vehicle 100 to identify the production step that the target vehicle 100 will undergo next. Specifically, in Step S110b, the step identification unit 215 acquires the step information of the target vehicle 100 based on, for example, as described in the first embodiment, the information indicating the execution order of the production steps executed to the target vehicle 100 or the information indicating the production step to be executed to the target vehicle 100 next.

In this embodiment, in the state identification processing of Step S115b, the state identification unit 230 identifies the target state with reference to the database DB based on, for example, the step information of the target vehicle 100 acquired in Step S110b. In this case, for example, identification information of each production step and a start state for each production step are stored in association with each other in the database DB.

According to the system 50 in this embodiment described above, the target state is identified based on the step information of the target vehicle 100, and a command is given to bring the state of the target vehicle 100 into the target state. Therefore, also according to the system 50 in this embodiment, a possibility that the production step is appropriately executed can be increased.

Note that in another embodiment, for example, the step identification unit 215 may acquire both the location information and the step information of the target vehicle 100 and identify the target state based on the location information and the step information.

### G. Seventh Embodiment:

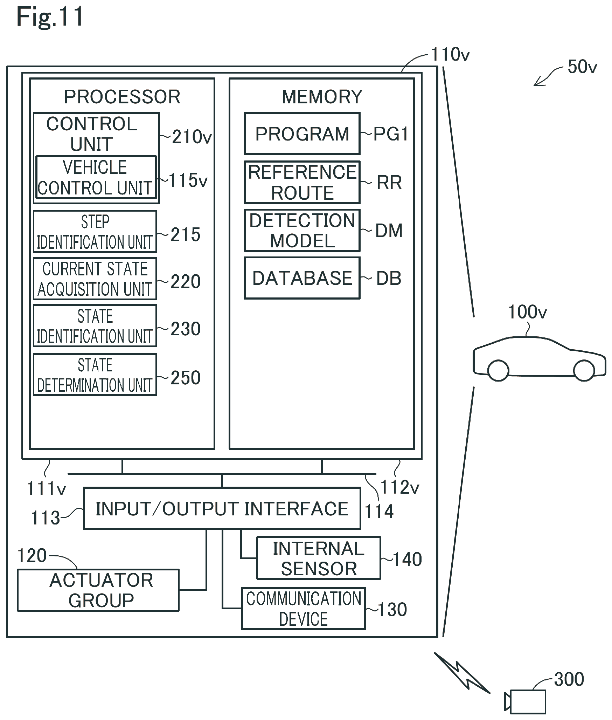

Fig. 11 is a block diagram illustrating a configuration of a system 50v according to a seventh embodiment. In this embodiment, the system 50v is different from that in the first embodiment in that the system 50v does not include the server 200. Further, a vehicle 100v in this embodiment is capable of running by autonomous control of the vehicle 100v. Other configurations are the same as those in the first embodiment unless otherwise specified.

In this embodiment, a processor 111v of a vehicle control device 110v executes the program PG1 stored in a memory 112v, thus functioning as a control unit 210v, the step identification unit 215, the current state acquisition unit 220, the state identification unit 230, and the state determination unit 250. Further, in this embodiment, the control unit 210v functions as a vehicle control unit 115v. The vehicle control unit 115v acquires an output result of a sensor and uses the output result to generate the running control signal. The vehicle control unit 115v then outputs the generated running control signal to operate the actuator group 120, and thereby can cause the vehicle 100v to run by autonomous control. In this embodiment, the memory 112v stores, in addition to the program PG1, the detection model DM, the reference route RR, and the database DB in advance. The vehicle control device 110v in the seventh embodiment corresponds to the "control device" in the present disclosure.

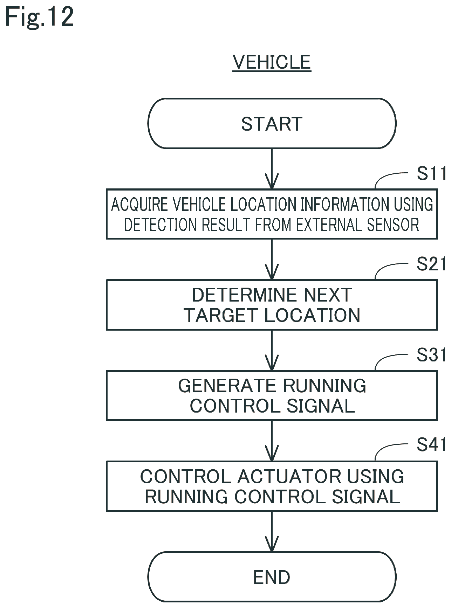

Fig. 12 is a flowchart illustrating a procedure of running control of the vehicle 100v according to the seventh embodiment. In the procedure in Fig. 12, the processor 111v of the vehicle 100v executes the program PG1, thus functioning as the control unit 210v.

In step S11, the processor 111v of the vehicle control device 110v acquires vehicle location information using detection result output from the camera as the external sensor 300. In step S21, the processor 111v determines a target location to which the vehicle 100 is to move next. In step S31, the processor 111v generates a running control signal for causing the vehicle 100v to run to the determined target location. In step S41, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator in a predetermined cycle. According to the system 50v in the present embodiment, it is possible to cause the vehicle 100v to run by autonomous control without controlling the vehicle 100v remotely using the server 200.

In this embodiment, processing similar to the vehicle control processing in Fig. 5 is executed by the processor 111v of the vehicle 100v, for example, at given time intervals. In this embodiment, "target vehicle" means an own vehicle. Each step in Fig. 5 is executed by the processor 111v. For example, in Step S105, the current state acquisition unit 220 of the vehicle 100v acquires the current state of the vehicle 100v by using the internal sensor 140 or the external sensor 300 at given time intervals, and causes the memory 112v to store the acquired current state. Further, in Step S120, the control unit 210v of the vehicle 100v generates and outputs a control command to bring a state of the vehicle 100v into the target state identified in Step S115. Then, the vehicle control unit 115v controls the actuator group 120 provided to the vehicle 100v based on the generated control command. Further, in Step S140, the control unit 210v generates and outputs a control command to move the vehicle 100v to the target work place through the return line connected to the production line and a control command to bring the state of the target vehicle 100v into the target state. Further, in the stop processing of Step S145, the control unit 210v generates and outputs, for example, the running control signal to brake the vehicle 100v. Note that in another embodiment, for example, processing similar to the vehicle control processing in Fig. 10 may be executed by the processor 111v.

Also according to the system 50v in this embodiment described above, the target state of the target vehicle 100v is identified, and the target vehicle 100v is controlled in such a manner that the state of the target vehicle 100v becomes the target state. Therefore, a possibility that the production step is appropriately executed can be increased.

### H. Other Embodiments:

(H1) In each embodiment described above, the control unit 210 does not execute the state control processing when the current state is the target state. However, the control unit 210 may execute the state control processing regardless of whether the current state is the target state. In this case, the system 50 may not include the current state acquisition unit 220. That is, for example, the server 200 and the vehicle control device 110 may not include the current state acquisition unit 220.

(H2) In each embodiment described above, the control unit 210 executes all of the stop processing, the evacuation processing, and the notification processing in the subsequent processing, but may execute only one or two of them. In a case in which the evacuation processing is not executed, the factory FC may not include the evacuation place. Further, in a case in which the notification processing is not executed, the system 50 may not include the notification unit 400. The control unit 210 may not have the function of executing unmanned driving, and a functional unit that executes unmanned driving may be provided separately from the control unit 210 in the system 50. Specifically, in a case in which the control unit 210 executes only the notification processing in the subsequent processing, the control unit 210 may not have the function of executing unmanned driving. Further, for example, in a case in which the control unit 210 only outputs a signal serving as a trigger for stopping the vehicle 100 in the stop processing, or in a case in which the control unit 210 only outputs a signal serving as a trigger for evacuating the vehicle 100 in the evacuation processing, the control unit 210 may not have the function of executing unmanned driving.

(H3) In each embodiment described above, the system 50 includes the state determination unit 250, but may not include the state determination unit 250. That is, for example, the server 200 and the vehicle control device 110 may not include the state determination unit 250.

(H4) In each embodiment described above, the factory FC includes the return line, but may not include the return line. In this case, for example, the evacuation place may be provided to a place different from the return line. Further, in this case, the evacuation processing may not be the processing of returning the target vehicle 100 to the target work place through the return line, but may be, for example, processing of simply evacuating the target vehicle 100 to the evacuation place.

(H5) In each embodiment described above, the control unit 210 executes the evacuation processing again when the state of the target vehicle 100 is not the target state in the re-determination processing, but may not execute the evacuation processing again. In this case, for example, the control unit 210 may execute the stop processing and the notification processing without re-executing the evacuation processing when the state of the target vehicle 100 is not the target state in the re-determination processing.

(H6) In each embodiment described above, the control unit 210 does not execute the stop processing and the notification processing when the number of evacuations is equal to or less than the reference number, and executes the stop processing and the notification processing when the number of evacuations is greater than the reference number. However, the control unit 210 may execute at least only one of the stop processing and the notification processing when the number of evacuations is equal to or less than the reference number. Further, the control unit 210 may not change the processing content in accordance with the number of evacuations as described above. In this case, for example, the control unit 210 may not execute the stop processing and the notification processing regardless of the number of evacuations, or may execute the stop processing and the notification processing regardless of the number of evacuations.

(H7) In each embodiment described above, the number of work places included in the factory FC and the number of production steps executed in the factory FC may be any numbers. For example, the number of work places included in the factory FC may be one, or may be any number of two or more. Further, the number of production steps executed in the factory FC may be one, or may be any number of two or more. The execution order of the production steps and the combination of the production steps executed are not limited to the order and the combination described in each embodiment described above, but may be any order and combination. Two or more different production steps may be executed at one work place. In this case, in order to execute two or more different production steps, a device having functions for executing a plurality of production steps or a plurality of devices may be installed at the work place. In the case in which two or more different production steps are executed at one work place as described above and when the state identification unit 230 identifies the target state based on the location information, a start state may be defined as the state of the vehicle 100 for the production step executed first among the plurality of production steps executed at the one work place. Further, in the case in which two or more different production steps are executed at one work place and when the state identification unit 230 identifies the target state based on the step information, a start state may be defined for each production step executed at the one work place. Further, for example, any production step other than the wheel alignment inspection step and the side-slip inspection step may include the start state including the state of the vehicle 100 for not interfering with another production step.

(H8) In each embodiment described above, in the database DB, the start state may be associated with location information indicating a track. In this case, for example, in the database DB, a certain track may be associated with the start state for the production step executed at the work place to be reached next.

(H9) In each embodiment described above, in the system 50, various functional units, such as the control unit 210, the step identification unit 215, the state identification unit 230, and the state determination unit 250 may be provided to the vehicle 100. In this case, as described in the seventh embodiment, all of the control unit 210, the step identification unit 215, the state identification unit 230, and the state determination unit 250 may be provided to the vehicle 100, or one or some of these functional units may be provided to the vehicle 100. Further, in the system 50, one or some or all of these functional units may be provided to a device outside of the server 200 and the vehicle 100.

(H10) In each embodiment described above, the external sensor 300 is a camera. However, the external sensor 300 is not limited to a camera, and may be, for example, a distance measuring device such as LiDAR (light detection and ranging). In this case, the detection result output by the external sensor 300 may be three-dimensional point cloud data representing the vehicle 100. In this case, the server 200 and the vehicle 100 may acquire the vehicle location information by template matching using the three-dimensional point cloud data as the detection result and reference point cloud data prepared in advance.

(H11) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.

(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.

(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.

(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(H12) In the seventh embodiment described above, the internal sensor 140 may be installed to the vehicle 100v, and the detection result output from the internal sensor 140 may be used for at least one of generation of a route and generation of the running control signal. For example, the vehicle 100v may acquire the detection result of the internal sensor 140 and reflect the detection result of the internal sensor 140 on a route in generating the route. The vehicle 100v may acquire the detection result of the internal sensor 140 and reflect the detection result of the internal sensor 140 on the running control signal in generating the running control signal.

(H13) In the above-described seventh embodiment in which the vehicle 100v can be running by autonomous control, the vehicle 100v acquires vehicle location information using detection result from the external sensor 300. By contrast, the vehicle 100v may be equipped with the internal sensor 140, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 using the generated running control signal. In this case, the vehicle 100v is capable of running without using any detection result from an external sensor. The vehicle 100v may acquire target arrival time or traffic congestion information from outside the vehicle 100v and reflect the target arrival time or traffic congestion information in at least one of the route and the running control signal. The functional configuration of the system 50v may be entirely provided at the vehicle 100v. Specifically, the processes realized by the system 50v in the present disclosure may be realized by the vehicle 100v alone.

(H14) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(H15) In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the vehicle 100 may include the vehicle control device 110 and the actuator group 120. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from a factory while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(H16) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(H17) A configuration for realizing running of the vehicle 100 by unmanned driving is also called a "Remote Control auto Driving system". Conveying a vehicle using Remote Control Auto Driving system is also called "self-running conveyance". Producing the vehicle 100 using self-running conveyance is also called "self-running production". In self-running production, for example, at least part of the conveyance of vehicles is realized by self-running conveyance in a factory where the vehicle 100 is manufactured.

(H18) In each embodiment described above, some or all of the functions and processing implemented by software may be implemented by hardware. Further, some or all of the functions and processing implemented by hardware may be implemented by software. As hardware for implementing various functions in each of the above embodiments, for example, various circuits such as an integrated circuit and a discrete circuit may be used.

The present disclosure is not limited to the embodiments described above, and can be implemented in various configurations without departing from the subject matter of the present disclosure. For example, in order to solve some or all of the aforementioned problems or to achieve some or all of the aforementioned effects, the technical features of the embodiment corresponding to the technical features in each aspect described in the summary can appropriately be substituted or combined. Moreover, unless the technical feature is explained herein as being essential, it can be eliminated as appropriate.

### REFERENCE SIGNS LIST

50, 50v system
100, 100A, 100B, 100b, 100v vehicle
110, 110v vehicle control device
111, 111v processor
112, 112v memory
113 input/output interface
114 internal bus
115, 115v vehicle control unit
120 actuator group
130 communication device
140 internal sensor
200 server
201 processor
202 memory
203 input/output interface
204 internal bus
205 communication device
210, 210v control unit
215 step identification unit
220 current state acquisition unit
230 state identification unit
250 state determination unit
300 external sensor
400 notification unit
401 display unit

## Claims

1. A control device comprising:
a step identification unit configured to identify a production step to be executed to a vehicle capable of running by unmanned driving;
a state identification unit configured to identify a start state defining a state of the vehicle at a timing at which the identified production step is started; and
a control unit configured to execute state control processing of controlling the vehicle in such a manner that the state of the vehicle becomes the start state.

2. The control device according to claim 1, comprising a state determination unit configured to execute, after execution of the state control processing, determination processing of determining whether the state of the vehicle is the start state, wherein
when the state of the vehicle is different from the start state in the determination processing, the control unit is configured to execute at least one of:
stop processing of stopping running of the vehicle;
evacuation processing of evacuating the vehicle to a predetermined evacuation place; and
notification processing of giving notification of an abnormality.

3. The control device according to claim 2, wherein the control unit is configured:
not to execute the stop processing and the notification processing when a number of executions of the evacuation processing is equal to or less than a predetermined reference number; and
to execute at least one of the stop processing and the notification processing when the number of executions is greater than the reference number.

4. The control device according to claim 1, wherein the production step is a step of inspecting wheel alignment of the vehicle, and
the start state comprises that a shift position of the vehicle is in a neutral range, a foot brake and a parking brake of the vehicle are not operating, and a steering angle of the vehicle is within a predetermined range.

5. The control device according to claim 1, wherein the production step is a step of inspecting a side-slip amount of the vehicle, and
the start state comprises that a vehicle speed of the vehicle is equal to or less than a predetermined value, a shift position of the vehicle is in a neutral range, and a steering angle of the vehicle is within a predetermined range.

6. The control device according to claim 1, wherein the production step is a step of inspecting braking force of a braking device of the vehicle, and
the start state comprises that a brake different from a brake to be inspected is not operating in the vehicle, a shift position of the vehicle is in a neutral range, and a steering angle of the vehicle is within a predetermined range.

7. The control device according to claim 1, wherein the production step is a step of optically inspecting a headlamp provided to the vehicle, and
the start state comprises that a shift position of the vehicle is in a parking range.

8. The control device according to claim 7, wherein the start state comprises that the shift position is in a neutral range immediately before the parking range.

9. The control device according to claim 1, wherein the production step is a step of inspecting an acceleration device provided to the vehicle by causing the vehicle to run on a rotatable roller, and
the start state comprises that a vehicle speed of the vehicle is equal to or less than a predetermined value, and a steering angle of the vehicle is within a predetermined range.

10. The control device according to claim 1, wherein the production step is a step of inspecting a steering device provided to the vehicle, and
the start state comprises that a shift position of the vehicle is in a neutral range, and a steering force applied to the steering device is equal to or less than a predetermined value.

11. The control device according to claim 1, wherein the production step is a step of electrically connecting a predetermined component to a predetermined portion of the vehicle, and
the start state comprises that power is not supplied to the portion.

12. The control device according to any one of claims 1 to 11, wherein when the production step is a first production step, the start state comprises a state for not interfering with a second production step different from the first production step.

13. The control device according to claim 12, wherein a work place for executing the first production step and a work place for executing the second production step are adjacent to each other.

14. The control device according to claim 13, wherein the second production step is executed after the first production step.

15. The control device according to claim 13, wherein the second production step is a step of executing work using an optical sensor, and
the start state comprises that a lighting device provided to the vehicle is not turned on.

16. The control device according to claim 13, wherein the second production step is a step of executing work using a radar, and
the start state comprises that a radio wave is not transmitted from a radar provided to the vehicle.

17. A vehicle control method comprising:
a step identification step of identifying a production step to be executed to a vehicle capable of running by unmanned driving;
a state identification step of identifying a start state defining a state of the vehicle at a timing at which the identified production step is started; and
a state control step of controlling the vehicle in such a manner that the state of the vehicle becomes the start state.

18. A system comprising:
a step identification unit configured to identify a production step to be executed to a vehicle capable of running by unmanned driving;
a state identification unit configured to identify a start state defining a state of the vehicle at a timing at which the identified production step is started; and
a control unit configured to execute state control processing of controlling the vehicle in such a manner that the state of the vehicle becomes the start state.
